# EUROPÄISCHE PATENTSCHRIFT

(11) **EP 1 455 054 B1**
(45) Veröffentlichungstag und Bekanntmachung des Hinweises auf die Patenterteilung: **22.03.2006**
(21) Anmeldenummer: 04090048.2
(22) Anmeldetag: 13.02.2004
(51) Int. Cl.: F01D 21/02, F02C 9/46

(54) **Abschaltsystem zur Vermeidung eines Überdrehzahlzustandes bei einem Wellenbruch**
Shut-down system to avoid overspeed condition in case of shaft breakage
Système d'arrêt pour éviter une condition de survitesse à cause d'une rupture d'arbre

(30) Priorität: 07.03.2003 DE 10309910
(43) Veröffentlichungstag der Anmeldung: 08.09.2004
(73) Patentinhaber: Rolls-Royce Deutschland Ltd & Co KG, 15827 Dahlewitz (DE)
(72) Erfinder: Opper, Hans-Otto, 12307 Berlin (DE)
(74) Vertreter: Wablat, Wolfgang

(56) Entgegenhaltungen:
- DE-A- 19 727 296
- GB-A- 872 654
- GB-A- 2 377 731
- US-A- 4 473 998
- US-A- 4 712 372

## Beschreibung

Die Erfindung betrifft ein Abschaltsystem zur Vermeidung eines Überdrehzahlzustandes bei einem Wellenbruch, insbesondere zur Unterbrechung der Kraftstoffzufuhr für ein Flugzeugtriebwerk bei einem Bruch der-Niederdruckturbinenwelle, wobei die betreffende Welle auf deren Energie verbrauchender Seite mit einer koaxial angeordneten Referenzwelle verbunden ist.

Bei Strömungskraftmaschinen im Allgemeinen und bei Flugzeugtriebwerken im Besonderen stellt ein Wellenbruch,-insbesondere der Bruch der Niederdruckturbinenwelle, ein erhebliches Gefährdungspotential für Menschen und Sachwerte dar. Bei einem Bruch einer Turbinenwelle kommt es zu einem unkontrollierten Drehzahlanstieg des Energie erzeugende, d. h. mit dem Turbinenrotor verbundenen Teils der Welle, der von dem Energie aufnehmenden Teil der Welle abgetrennt ist. Infolgedessen können das Triebwerk und das Flugzeug beschädigt bzw. zerstört werden.

Es sind verschiedene Vorrichtungen zum mechanischen und/oder elektronischen Erfassen eines Wellenbruchs und einer daraufhin erfolgenden Unterbrechung der Energiezufuhr (Kraftstoffzufuhr) zur Vermeidung eines Überdrehzahlzustandes und der daraus resultierenden negativen Folgen bekannt. Dabei kommt es im Wesentlichen darauf an, einen Wellenbruch möglichst früh zu erkennen und das Triebwerk in kürzester Zeit durch Unterbrechung der Kraftstoffzufuhr abzuschalten.

Bei einer aus der US 4,712,372 bekannten elektronischen Einrichtung zum Erkennen bzw. Vermeiden eines Überdrehzahlzustandes sind an der gezahnten Turbinenwelle, und zwar am Energie verbrauchenden Teil und am Energie erzeugenden Teil, zwei induktive Sensoren angeordnet, die ein der Anzahl der gezählten Impulse entsprechendes drehzahlproportionales Signal erzeugen. Im Falle einer Drehzahldifferenz durch eine höhere Geschwindigkeit des mit dem Turbinenrotor verbundenen Teils der Welle und eines somit detektierten Wellenbruchs wird ein magnetisches Kraftstoffventil angesteuert und die Kraftstoffzufuhr unterbrochen, so dass der Turbinenrotor nicht weiter beschleunigt wird. Die elektronischen Abschaltsysteme stellen aber insofern noch eine Gefahrenquelle dar, als deren Ansprechzeiten relativ lang sind. Zudem erfordern längere Abschaltzeiten aus Sicherheitsgründen auch einen mit einer Gewichtszunahme verbundenen größeren Materialeinsatz im Bereich der Turbine.

Darüber hinaus werden auch mechanische Vorrichtungen mit einer der Turbinenwelle koaxial zugeordneten, an deren vorderem, Energie verbrauchenden Ende befestigten Referenzwelle beschrieben. Im Fall eines Wellenbruches wird die dadurch bedingte Verdrehung der Turbinenwelle relativ zur Referenzwelle zur mechanischen Einwirkung auf das Kraftstoff-Absperrventil genutzt. Bei einer bekannten mechanischen Vorrichtung dieser Art zur Begrenzung von Überdrehzahlzuständen bei einem Bruch der die Niederdruckturbine und den Fan eines Flugzeugtriebwerkes verbindenden Niederdruckturbinenwelle sind jeweils am hinteren Ende der beiden Wellen Aussparungen ausgebildet. Bei einem Wellenbruch dreht sich die Niederdruckturbinenwelle relativ zur Referenzwelle, so dass die zuvor zueinander versetzt angeordneten Aussparungen in beiden Wellen zur Deckung kommen und dadurch ein an der Niederdruckturbinenwelle angebrachter vorgespannter Mitnehmer radial ausgeschwenkt wird und in eine am Ende eines Drahtseils vorgesehene Drahtschlinge eingreift. Die auf das Drahtseil wirkende Zugkraft wird auf ein Kraftstoff-Absperrventil übertragen, um dieses zu schließen und damit infolge der unterbrochenen Kraftstoffzufuhr den Überdrehzahlzustand zu begrenzen. Die bekannten mechanischen Vorrichtungen unter Verwendung einer Referenzwelle sind insofern nachteilig, als sie erst nach einem vergleichsweise großen Verdrehwinkel zwischen Turbinen- und Referenzwelle ansprechen. Zudem ist die rein mechanische Ausbildung des Abschaltsystems und insbesondere die Seilzugverbindung von der Turbinenwelle zum Kraftstoff-Absperrventil, konstruktiv aufwendig und verschleißanfällig.

Der Erfindung liegt daher die Aufgabe zugrunde, die bekannten mechanischen Abschaltsysteme unter Verwendung einer Referenzwelle so weiterzubilden, dass ein Wellenbruch in kürzester Zeit erkannt und ein daraus resultierender Überdrehzahlzustand verhindert oder schnell begrenzt wird.

Erfindungsgemäß wird die Aufgabe mit einem gemäß den Merkmalen des Patentanspruchs 1 ausgebildeten Abschaltsystem gelöst. Aus den Unteransprüchen ergeben sich weitere Merkmale und vorteilhafte Weiterbildungen der Erfindung.

Der Grundgedanke der Erfindung besteht darin, dass auf der Grundlage einer bereits sehr geringen Verdrehung der Hauptwelle gegenüber der Referenzwelle ein in axialer Richtung bewegliches, unter Vorspannung gehaltenes Signalauslöseorgan entriegelt wird und mit großer Beschleunigung und auf kurzem Weg auf einen am Turbinengehäuse montierten Sensor oder elektrischen Schalter zu bewegt wird, so dass durch die Abstandsänderung zu einem induktiven, kapazitiven oder ähnlichen Sensor oder die Unterbrechung eines Lichtstrahls oder einen von dem Signalauslöseorgan betätigten Schalter ein elektrisches Signal erzeugt wird, mit dem über eine elektronische Schaltung die Energiezufuhr zum Energie erzeugenden Teil (Antriebsteil) der betreffenden Welle unterbrochen wird. Die Freigabe des über radial vorstehende Mitnehmerstifte mittels Sperrhaken gehaltenen Signalauslöseorgans erfolgt mit den Mitnehmerstiften unmittelbar benachbarten, von der Hauptwelle ausgehenden Mitnehmern.

Gemäß einem weiteren Merkmal der Erfindung ist das Signalauslöseorgan ein in einem Gehäuseteil der Referenzwelle axial beweglicher, aus Kolbenstange und Kolbenplatte gebildeter Kolben, der mit mindestens einer Druckfeder in Wirkverbindung steht. Das Gehäuse befindet sich in einer von der Hauptwelle ausgehenden Führungshülse, von der die an den Mitnehmerstiften der Kolbenplatte angreifenden Mitnehmer radial nach innen abstreben.

Das auf dieser Basis ausgebildete mechanisch-elektronische Abschaltsystem ist konstruktiv einfach und funktionssicher ausgebildet. Sein wesentlicher Vorteil besteht jedoch darin, dass ein Wellenbruch in kürzester Zeit, gegebenenfalls schon in der Anbruchphase, detektiert werden kann und daraufhin sofort ein elektrisches Signal zur elektronisch gesteuerten Unterbrechung der weiteren Energiezufuhr erzeugt werden kann und somit ein gefährlicher Überdrehzahlzustand verhindert oder zumindest begrenzt wird. Gegenüber den be-kannten Sicherheitssystemen können deutlich verringerte Signalauslösezeiten und damit Abschaltzeiten für die Kraftstoffzufuhr, die im vorliegenden Fall etwa bei 1 bis 3 Millisekunden liegen, erreicht werden, so dass nicht nur die Gefahr eines Schadens und das Schadensausmaß sondern auch die aus Sicherheitsgründen erforderliche Dimensionierung der Triebwerksrotoren verringert und mithin Gewicht eingespart werden kann.

Die Redundanz und Funktionssicherheit des Gesamtsystems ergibt sich daraus, das alle Bauteile zur Freigabe und Bewegung des Signalauslöseorgans und zur Erzeugung des elektrischen Signals für die elektronische Steuerung mehrfach angeordnet sind oder sein können.

Ausführungsbeispiele der Erfindung, aus denen sich zweckmäßige Weiterbildungen und weitere Vorteile ergeben, werden anhand der Zeichnung näher erläutert. Es zeigen:
Fig. 1 eine Teilansicht eines Gasturbinen-Triebwerks im Bereich des Niederdruckturbinenrotors mit einem an die Niederdruckturbinenwelle gekoppelten mechanisch-induktiven Abschaltsystem für die Kraftstoffzufuhr bei einem Bruch der Niederdruckturbinenwelle;
Fig. 2 eine detaillierte Darstellung der mechanisch-induktiven Abschaltvorrichtung nach Fig. 1;
Fig. 3 eine abgewickelte Teilansicht des mechanischen Teils der Abschaltvorrichtung gemäß Pfeil A in Fig. 2;

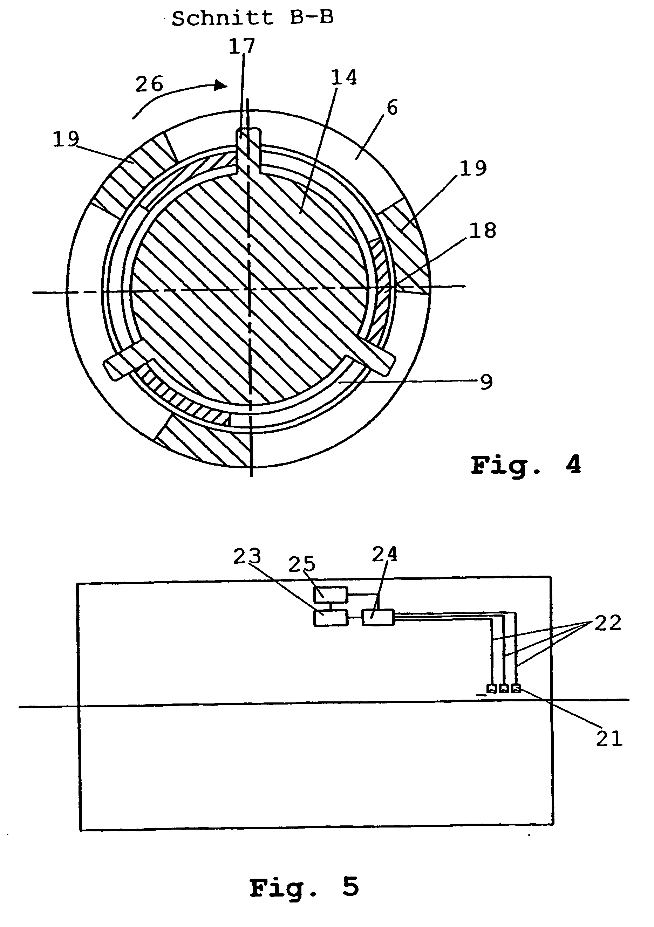

Fig. 4 einen Schnitt längs der Linie BB in Fig. 2;
Fig. 5 eine an die mechanisch-induktive Abschaltvorrichtung gekoppelte Schaltungsanordnung zur elektronisch gesteuerten Unterbrechung der Kraftstoffzufuhr;
Fig. 6 eine Schnittansicht einer anderen Ausführungsvariante der Abschaltvorrichtung, jedoch mit mechanischoptischer Auslösung des elektronisch gesteuerten Abschaltvorgangs bei einem Bruch der Niederdruckturbinenwelle;
Fig. 7 eine Schnittansicht einer weiteren Ausführungsvariante der Abschaltvorrichtung, jedoch mit mechanischelektrischer Auslösung des elektronisch gesteuerten Abschaltvorgangs.

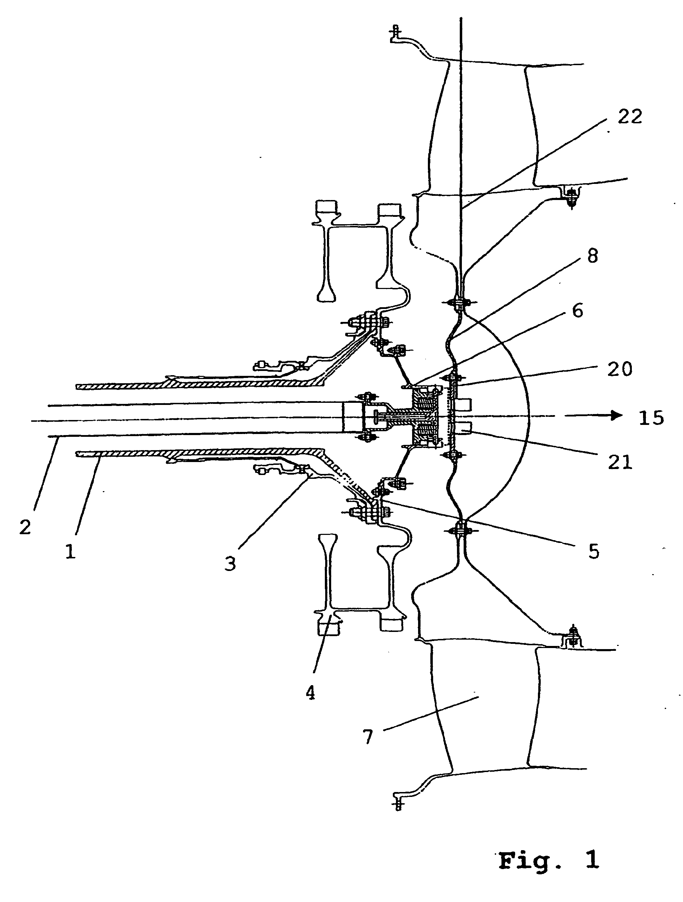

Fig. 1 zeigt eine Teilansicht eines Gasturbinen-Triebwerks im Bereich des Niederdruckturbinenrotors 4. Gemäß Fig. 1 ist koaxial zur Niederdruckturbinenwelle 1 eine Referenzwelle 2 angeordnet, die im vorderen Teil (Energie verbrauchenden Teil) der Niederdruckturbinenwelle 1 (nicht dargestellt) formschlüssig mit dieser verbunden ist. Am hinteren Ende der Niederdruckturbinenwelle 1 sind ein Lagerträger 3 und der Niederdruckturbinenrotor 4 befestigt. Eine an einem Befestigungsflansch 5 des Niederdruckturbinenrotors 4 angebrachte Führungshülse 6 nimmt den mechanischen Teil des Abschaltsystems auf, der fest mit der Referenzwelle 2 verbunden ist. In axialer Richtung gegenüber der Führungshülse 6 ist am Turbinenaustrittsgehäuse 7 eine Halteplatte 8 mit an dieser verschraubter Sensorplatte 20 montiert, an der zur induktiven Erfassung eines von dem mechanischen Teil des Abschaltsystems angezeigten Wellenbruchs induktive Sensoren 21 angebracht sind, von denen Verbindungskabel 22 zur einer elektronischen Steuerung 24 führen, die elektrisch mit einer Stromversorgung 25 und dem Kraftstoff-Absperrventil 23 (siehe auch Fig. 5) verbunden ist.

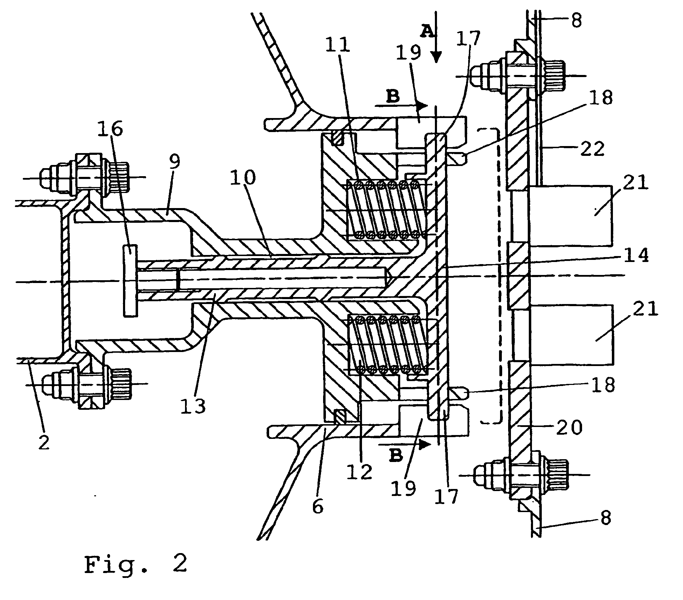

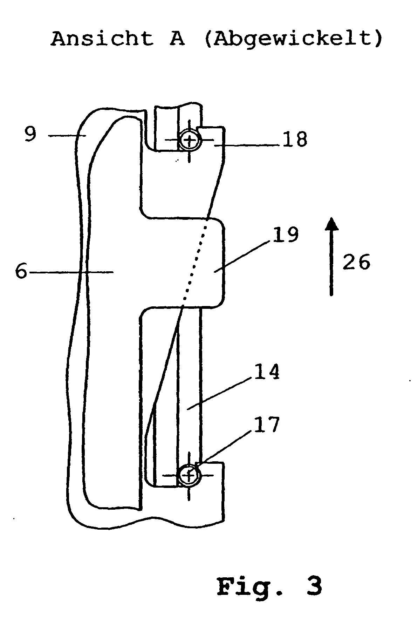

Der mechanische Teil des Abschaltsystems umfasst, wie insbesondere aus Fig. 2 ersichtlich ist, ein an einer Seite an der Referenzwelle 2 befestigtes und an der anderen Seite in der mit der Niederdruckturbinenwelle 1 verbundenen Führungshülse 6 geführtes Gehäuse 9 mit einer Kolbenführung 10 und Aufnahmebuchsen 11 für jeweils eine vorgespannte Druckfeder 12 als eine Kraft ausübendes Organ im Falle eines Wellenbruchs. In der Kolbenführung 10 ist eine Kolbenstange 13 axial und drehbeweglich geführt, an deren gegenüberliegenden Stirnseiten an der in Strömungsrichtung 15 vorderen Seite eine von der Federkraft der Druckfedern 12 beaufschlagte Kolbenplatte 14 (Signalauslöseorgan) und an der in Strömungsrichtung 15 hinteren Seite eine die axiale Bewegung der Kolbenplatte 14 in Strömungsrichtung begrenzende Anschlagschraube 16 vorgesehen sind. Die Kolbenstange 13 und die Kolbenplatte 14 können aus Metall, Kunststoff oder Kompositmaterial, zum Beispiel Kohlefasermaterial, bestehen oder auch aus einer Kombination aus Leichtbauwerkstoffen und Metall gefertigt sein. An der Umfangsfläche der Kolbenplatte 14 sind, wie insbesondere aus der in Fig. 3 in abgewickelter Darstellung wiedergegebenen Ansicht A ersichtlich ist, zwei sich in radialer Richtung erstreckende zylindrische Mitnehmerstifte 17 angeformt, über die die Kolbenplatte 14 mit Hilfe von am Gehäuse 9 angebrachten Sperrhaken 18 in der unter Federkraft stehenden Ausgangsstellung gehalten wird. An die Führungshülse 6 sind sich in axialer Richtung erstreckende Mitnehmer 19 angeformt, die in einem bestimmten Drehwinkel von den zylindrischen Mitnehmerstiften 17 beabstandet sind. Gegenüber der Kolbenplatte 14 befinden sich, wie bereits erwähnt, die über die elektronische Steuerung und die Stromversorgung 25 an das Kraftstoff-Absperrventil 23 angeschlossenen induktiven Sensoren 21 zur induktiven Detektion eines Wellenbruchs und der daraufhin erfolgenden Unterbrechung der Kraftstoffzufuhr.

Die Funktion der zuvor beschriebenen Vorrichtung zur mechanisch-induktiven Detektion eines Wellenbruchs und zur elektronischen Abschaltung der Kraftstoffzufuhr für den Antrieb der Niederdruckturbinenwelle ist folgende:

Bei einem Bruch der Niederdruckturbinenwelle 1, bei dem kein Drehmoment auf den Niederdruckverdichter (Energie verbrauchende Seite) übertragen wird, aber der Niederdruckturbinenrotor 4 noch mit der Energie des Kerntriebwerksstroms beaufschlagt wird, kommt es zu einer rotatorischen Relativbewegung (Verdrehung) des mit dem Niederdruckturbinenrotor 4 verbundenen Teils der Niederdruckturbinenwelle 1 (Energie erzeugende Seite) gegenüber der Referenzwelle 2. Bei einer bestimmten Drehwinkelverschiebung der Niederdruckturbinenwelle 1 gegenüber der Referenzwelle 2 kommen die an der Führungshülse 6 angeformten Mitnehmer 19 aufgrund der Verdrehung der Führungshülse 6 in Richtung des Pfeils 26 mit den zylindrischen Mitnehmerstiften 17 an der Kolbenplatte 14 in Eingriff. Die Kolbenplatte 14 wird nun ebenfalls in Richtung des Pfeils 26 gedreht und dabei deren axiale Halterung durch die Sperrhaken 18 freigegeben. Die nunmehr in axialer Richtung frei bewegliche Kolbenplatte 14 wird durch die Druckfedern 12 in Richtung der induktiven Sensoren 21 beschleunigt. Aufgrund der Abstandsänderung zwischen der Kolbenplatte 14 und den induktiven Sensoren 21 werden in diesen elektrische Signale erzeugt, die zu der elektronischen Steuerung 24, die über das Kraftstoff-Absperrventil 23 die Kraftstoffzufuhr unterbricht, übertragen werden.

Gegenüber den bekannten elektronischen und mechanischen Abschaltsystemen für die Kraftstoffzufuhr bei einem Wellenbruch können deutlich kürzere Signalauslösezeiten und damit Abschaltzeiten, die hier etwa bei 1 bis 3 ms liegen, erzielt werden, da der erforderliche Drehwinkel zur Freigabe der Kolbenplatte 14 schnell erreicht wird und der Weg der stark beschleunigten Kolbenplatte 14 zur Auslösung der elektrischen Signale sehr kurz ist. Infolgedessen können die Scheiben des Niederdruckturbinenrotors 4 deutlich kleiner ausgelegt und mithin erhebliche Gewichtseinsparungen erzielt werden. Da die Einleitung des Abschaltvorgangs von der Winkelposition der Niederdruckturbinenwelle 1 relativ zum Triebwerk unabhängig ist und somit zum frühest möglichen Zeitpunkt die Kraftstoffzufuhr gesperrt wird, kann im günstigsten Fall bereits bei einem Anbruch der Niederdruckturbinenwelle 1 die weitere Kraftstoffzufuhr unterbrochen werden, so dass die Beschädigung des Triebwerks auf ein geringes Ausmaß begrenzt ist. Das Abschaltsystem ist zudem einfach, platzsparend und leicht ausgebildet und arbeitet nahezu verschleißfrei. Zudem ist eine Nachrüstung von Gasturbinen mit dem vorgeschlagenen Abschaltsystem möglich.

Der mechanische Teil und der ein elektrisches Signal erzeugende Teil des Abschaltsystems sind jedoch nicht auf die vorliegende Ausführungsform beschränkt. So können die zylindrischen Mitnehmerstifte 17, die die Sperrhaken 18 und die Mitnehmer 19 sowie die Druckfedern 12 und die Sensoren 21 mehrfach angeordnet sein. Gleichermaßen kann die Druckfeder 12 auch zentrisch im Gehäuse 9 untergebracht sein. Anstelle der Druckfedern 12 können auch andere auf die Kolbenplatte 14 wirkende Mittel, zum Beispiel Gasdruck, genutzt werden.

Weitere Ausführungsformen sind hinsichtlich der Signalerzeugung für die elektronische Steuerung 24 möglich. Beispielsweise können auch kapazitive, optische oder Ultraschallsensoren eingesetzt werden oder das elektrische Signal für die elektronische Steuerung 24 zum Absperren des Kraftstoff-Absperrventils 23 kann durch einen mit der Kolbenplatte 14 betätigten Schalter, der einen Stromkreis schließt, bereitgestellt werden.

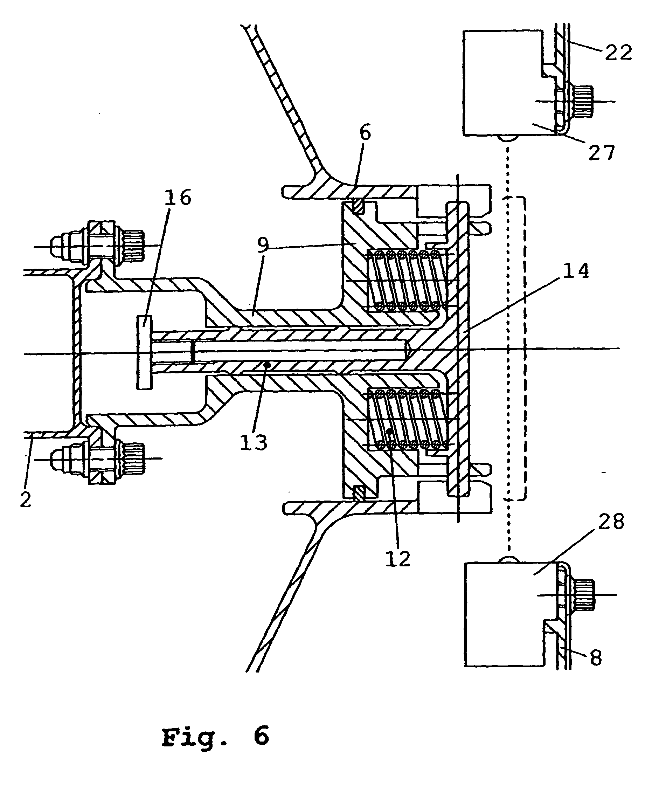

Wie Fig. 6 in einem weiteren Ausführungsbeispiel zeigt sind anstelle der induktiven Sensoren ein optischer Sender 27 und ein optischen Empfänger 28 so an der Halteplatte 8 angebracht, dass bei einer Unterbrechung der optischen Verbindung zwischen dem Sender 27 und dem Empfänger 28 durch die bei einem Wellenbruch freigegebene und nach hinten bewegten Kolbenplatte 14 das erforderliche elektrische Signal für die elektronische Steuerung 24 erzeugt wird. Selbstverständlich können aus Redundanzgründen auch hier mehrere Paare von optischen Sendern und Empfängern vorgesehen sein.

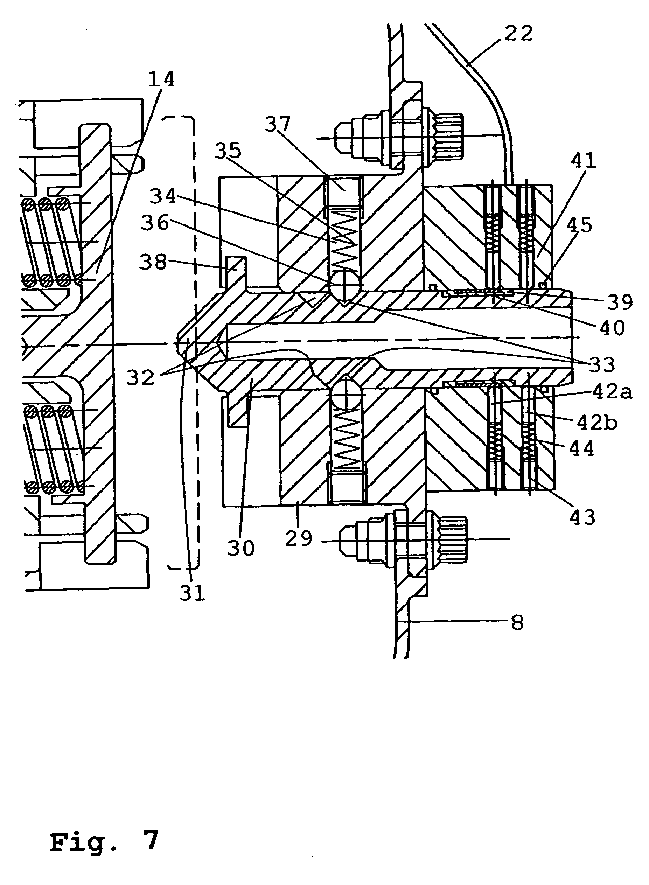

Gemäß einer in Fig. 7 gezeigten weiteren Ausführungsvariante kann bei unverändertem mechanischem Abschaltmechanismus die Erzeugung des elektrischen Signals für die elektronische Steuerung 24 auch mit einer elektrischen Schaltvorrichtung erfolgen. In diesem Fall ist in die Halteplatte 8 ein Schaltergehäuse 29 integriert, in dem ein Schaltzylinder 30 axial beweglich gelagert ist. Der mit einer der Kolbenplatte 14 gegenüberliegenden abgeflachten Spitze 31 sowie mit Führungsstiften 38 zur verdrehsicheren Führung ausgebildete Schaltzylinder 30 weist am Umfang eine vordere und eine hintere Haltenut 32 und 33 auf. In dem Schaltergehäuse 29 befindet sich eine radiale Bohrung 34, in der ein Verriegelungsorgan, bestehend aus einer unter der Wirkung einer Feder 35 stehenden Arretierkugel 36, angeordnet ist. Die Feder 35 wird durch eine Schraube 37 gehalten. Im hinteren Bereich des Schaltzylinders 30 ist auf einem Isolator 39 ein metallischer Leiter 40, dessen Oberfläche mit der des Schaltzylinders 30 bündig abschließt, angebracht. Ein dem Schaltergehäuse 29 zugeordneter Schalter 41 aus elektrisch nicht leitendem Material weist zwei Kontaktstifte 42 auf, die jeweils unter der Wirkung einer von einer Schraube 43 gehaltenen Feder 44 auf die Umfangsfläche des Schaltzylinders 30 wirken. Das Gehäuse des Schalters 41 ist durch Dichtringe 45 gegenüber dem Schaltzylinder 30 abgedichtet. In der in Fig. 7 gezeigten Ausgangsstellung (bei nicht gebrochener Niederdruckturbinenwelle 1) befindet sich der Schaltzylinder 30 in der dargestellten Position, in der die Arretierkugel 36 unter Federkraft in die hintere Haltenut 33 gedrückt wird und die vorderen Kontaktstifte 42a den elektrischen Leiter 40 berühren. Bei einem Bruch der Niederdruckturbinenwelle 1 wird die Kolbenplatte 14 in der oben beschriebenen Weise nach hinten beschleunigt, trifft dabei auf die abgeflachte Spitze 31 des Schaltzylinders 30 und drückt diesen nach hinten, und zwar bis die Arretierkugeln 36 in der vorderen Haltenut 32 verrasten. Damit liegen die vorderen und die hinteren Kontaktstifte 42a und 42b auf dem elektrischen Leiter 40. Das mit der so hergestellten elektrischen Verbindung erzeugte elektrische Signal wird über das Verbindungskabel 22 der elektronischen Steuerung 24 zur Ansteuerung des Kraftstoff-Absperrventils 23 zugeführt. Gemäß der in Fig. 7 gezeigten Ausführungsform sind jeweils zwei Paare Kontaktstifte 42a, 42b, zwei Isolatoren 39 und elektrische Leiter 40, zwei Arretierkugeln 36 und zwei Führungsstifte 38 vorgesehen. Aus funktionellen und Redundanzgründen können diese Bauteile auch mehrfach am Umfang des Schaltzylinders 30 bzw. mehrere, gegebenenfalls auf anderen Funktionsprinzipien beruhende Schalter angeordnet sein.

### Bezugszeichenliste

- 1: Welle, Niederdruckturbinenwelle
- 2: Referenzwelle
- 3: Lagerträger
- 4: Niederdruckturbinenrotor, Energie erzeugende Seite v. 1
- 5: Befestigungsflansch
- 6: Führungshülse v. 1
- 7: Turbinenaustrittsgehäuse
- 8: Halteplatte
- 9: Gehäuse
- 10: Kolbenführung
- 11: Aufnahmebuchse
- 12: Druckfeder, Kraft ausübendes Organ
- 13: Kolbenstange
- 14: Kolbenplatte, Signalauslöseorgan
- 15: Strömungsrichtung
- 16: Anschlagschraube, Anschlag
- 17: Mitnehmerstifte v. 14
- 18: Sperrhaken v. 9
- 19: Mitnehmer v. 6
- 20: Sensorplatte
- 21: Sensor, induktiver Sensor
- 22: Verbindungskabel
- 23: Kraftstoff-Absperrventil
- 24: Elektronische Steuerung
- 25: Stromversorgung
- 26: Drehrichtung v. 6, 14
- 27: Optischer Sender
- 28: Optischer Empfänger
- 29: Schaltergehäuse
- 30: Schaltzylinder
- 31: Abgeflachte Spitze v. 30
- 32: Vordere Haltenut v. 30
- 33: Hintere Haltenut v. 30
- 34: Radiale Bohrung
- 35: Feder
- 36: Arretierkugel
- 37: Schraube
- 38: Führungsstifte v. 30
- 39: Isolator
- 40: Elektrischer Leiter v. 30
- 41: Schalter
- 42a: vorderer Kontaktstift v. 41
- 42b: hinterer Kontaktstift v. 41
- 43: Schraube
- 44: Feder
- 45: Dichtring

## Patentansprüche

1. Abschaltsystem zur Vermeidung eines Überdrehzahlzustandes bei einem Wellenbruch, insbesondere zur Unterbrechung der Kraftstoffzufuhr für ein Flugzeugtriebwerk bei einem Bruch der Niederdruckturbinenwelle, wobei die betreffende Welle auf deren Energie verbrauchender Seite mit einer koaxial angeordneten Referenzwelle verbunden ist, **dadurch gekennzeichnet, dass** der Referenzwelle (2) auf der Energie erzeugenden Seite der Welle (1) ein an dieser axial und drehbar geführtes Signalauslöseorgan (13, 14) zugeordnet ist, das unter der Wirkung mindestens eines eine axiale Kraft ausübenden Organs (12) steht und über am Umfang des Signalauslöseorgans (13, 14) radial vorstehende Mitnehmerstifte (17) sowie Sperrhaken (18) in einer lösbaren Verriegelungsposition gehalten ist, wobei den Mitnehmerstiften (17) jeweils mit der Welle (1) verbundene Mitnehmer (19) in Umfangsrichtung seitlich gegenüberstehen, um im Falle eines Wellenbruchs und dem damit verbundenen Verdrehen der Welle (1) gegenüber der Referenzwelle (2) das Signalauslöseorgan (13, 14) aus der Verriegelungsposition zu lösen und dessen axiale Bewegung in Richtung mindestens eines dem Signalauslöseorgan (13, 14) axial gegenüberliegenden Sensors (21) oder elektrischen Schaltorgans (29, 30) zur Erzeugung eines elektrischen Signals für eine elektronische Steuerung (24) zur Unterbrechung der Energiezufuhr und Begrenzung eines Überdrehzahlzustandes freizugeben.

2. Abschaltsystem nach Anspruch 1, **dadurch gekennzeichnet, dass** das Signalauslöseorgan eine an einer Kolbenstange (13) angebrachte Kolbenplatte (14) mit den an deren Umfangsfläche vorgesehenen Mitnehmerstiften (17) umfasst, und die Kolbenstange (13), die ein Anschlagelement (16) zur Begrenzung ihres Axialweges aufweist, in einem axial an die Referenzwelle (2) angeschlossenen Gehäuse (9) geführt ist, das in einer von der Welle (1) gebildeten Führungshülse (6) mit am Innenumfang angeordneten Mitnehmern (19) gelagert ist und Aufnahmebuchsen (11) für die eine axiale Kraftwirkung ausübenden Organe (12) sowie weiterhin die an den Mitnehmerstiften (17) angreifenden Sperrhaken (18) aufweist.

3. Abschaltsystem nach Anspruch 2, **dadurch gekennzeichnet, dass** die eine axiale Kraftwirkung ausübenden Organe Druckfedern (12) oder Gasdruckorgane sind.

4. Abschaltsystem nach Anspruch 2, **dadurch gekennzeichnet, dass** das Anschlagelement eine Anschlagschraube (16) ist.

5. Abschaltvorrichtung nach Anspruch 1, **dadurch gekennzeichnet, dass** als Sensoren (21) induktive, kapazitive oder Ultraschallsensoren vorgesehen sind.

6. Abschaltsystem nach Anspruch 5, **dadurch gekennzeichnet, dass** die Sensoren (21) an einer Sensorplatte (20) angebracht sind, die an einer mit dem Turbinengehäuse (7) verbundenen Halteplatte (8) montiert ist.

7. Abschaltsystem nach Anspruch 5, **dadurch gekennzeichnet, dass** die Axialbewegung der Kolbenplatte (14) im Abstand vor den Sensoren (21) endet.

8. Abschaltvorrichtung nach Anspruch 1, **dadurch gekennzeichnet, dass** als Sensoren optische Sensoren in Form eines optischen Senders und Empfängers (27, 28) vorgesehen sind, die im Abstand einander gegenüberliegend an der Halteplatte (8) des Turbinengehäuses (7) angebracht sind, wobei der axiale Weg der Kolbenplatte (14) so eingestellt ist, dass die Kolbenplatte (14) bei deren durch Wellenbruch freigegebener Bewegung den vom Sender (27) erzeugten Lichtstrahl unterbricht.

9. Abschaltsystem nach Anspruch 1, **dadurch gekennzeichnet, dass** das elektrische Schaltorgan ein an der Halteplatte (8) montiertes Schaltgehäuse (29) mit Schalter (41) und einen darin in begrenztem Umfang axial beweglichen Schaltzylinder (30) umfasst, der bei axialer, infolge Wellenbruch initiierter Verschiebung durch das freigegebene Signalauslöseorgan (14) einen Stromkreis schließt und das elektrische Signal für die elektronische Steuerung (24) zur Unterbrechung der Energiezufuhr erzeugt.

10. Abschaltsystem nach Anspruch 9, **dadurch gekennzeichnet, dass** in dem Schaltergehäuse (29) eine auf die Umfangsfläche des Schaltzylinders (30) wirkende federbelastete Arretierkugel (36) angeordnet ist, die den Schaltzylinder (30) über eine vordere und hintere Haltenut (32, 33) in dem jeweiligen Schaltzustand fixiert, wobei in den Schaltzylinder (30) ein Isolator (39) und ein mit dessen Umfangsfläche bündig abschließender elektrischer Leiter (40) eingelassen sind und in den Schalter (41) zwei in axialer Richtung hintereinander liegende, auf den Schaltzylinder (30) wirkende federbelastete Kontaktstifte (42a, 42b) eingebunden sind, die in der eingeschobenen Schaltstellung des Schaltzylinders (30) zur Erzeugung eines elektrischen Signals über den elektrischen Leiter (40) miteinander verbunden sind.

11. Abschaltsystem nach Anspruch 1, **dadurch gekennzeichnet, dass** die Sensoren (21; 27, 28) und das elektrische Schaltorgan (29, 30) über ein elektrisches Verbindungskabel (22) mit der elektronischen Steuerung verbunden sind, die über eine Stromversorgung (25) an ein Kraftstoff-Absperrventil (23) zur Unterbrechung der Kraftstoffzufuhr angeschlossen ist.

## Claims

1. Shut-off system for the avoidance of an overspeed condition in the event of a shaft failure, in particular for the interruption of the fuel supply of an aircraft engine in the event of a failure of the low-pressure turbine shaft, with the energy-consuming end of the respective shaft being connected to a coaxial reference shaft,
**characterized in that**
a signal trip element (13, 14) is associated to the reference shaft (2) on the energy-generating end of the shaft (1) which is axially and rotatably located on the latter and is loaded by at least one item (12) exerting an axial force and held in a releasable locking position by driver pins (17) protruding radially from the periphery of the signal trip element (13, 14) and by latches (18), with each of the driver pins (17) circumferentially and laterally facing drivers (19) attached to the shaft (1) to release the signal trip element (13, 14) from the locking position in the event of a shaft failure and the resultant rotation of the shaft (1) relative to the reference shaft (2) and to enable the signal trip element (13, 14) to move axially towards at least one sensor (21) or electric switching element (29, 30) arranged axially opposite of the signal trip element (13, 14) to generate an electric signal for an electronic control (24) for the interruption of the energy supply and the limitation of an overspeed condition.

2. Shut-off system in accordance with Claim 1, **characterized in that** the signal trip element consists of a piston rod (13) attached to a piston plate (14) whose periphery is provided with driver pins (17), with the piston rod (13), which features a stop (16) for limiting its axial travel, being guided in a housing (9) axially attached to the reference shaft (2), with the housing (9) being located in a locating sleeve (6) which has drivers (19) on its inner circumference and is formed by the shaft (1), and provided with locating bushes (11) for the items (12) exerting an axial force and, further, with the latches (18) engaging the driver pins (17).

3. Shut-off system in accordance with Claim 2, **characterized in that** the items exerting an axial force are pressure springs (12) or gas pressure elements.

4. Shut-off system in accordance with Claim 2, **characterized in that** the stop is a stop bolt (16).

5. Shut-off device in accordance with Claim 1, **characterized in that** inductive, capacitive or ultrasonic sensors are provided as sensors (21).

6. Shut-off system in accordance with Claim 5, **characterized in that** the sensors (21) are arranged on a sensor pad (20) which is mounted to a mounting plate (8) attached to the turbine exit casing (7).

7. Shut-off system in accordance with Claim 5, **characterized in that** the axial movement of the piston plate (14) ends at a certain distance from the sensors (21).

8. Shut-off device in accordance with Claim 1, **characterized in that** optical sensors in the form of an optical transmitter and receiver (27, 28) are provided as sensors which are arranged remote and opposite of each other on the mounting plate (8) of the turbine casing (7), with the axial travel of the piston plate (14) being set such that the piston plate (14) interrupts the light beam produced by the optical transmitter (27) when, in the event of a shaft failure, the movement of the piston plate (14) is enabled.

9. Shut-off system in accordance with Claim 1, **characterized in that** the electric switching element comprises a switch housing (29) mounted on the mounting plate (8) with switch (41) and a switching cylinder (30) which is axially moveable therein to a limited extent, with the switching cylinder (30) closing an electric circuit upon being moved axially by the released signal trip element (14) in the event of a shaft failure and supplying the electric signal for the electronic control (24) for the interruption of the energy supply.

10. Shut-off system in accordance with Claim 9, **characterized in that** a spring-loaded locating ball (36) is arranged in the switch housing (29) which acts upon the periphery of the switching cylinder (30) and retains the switching cylinder (30) in the respective switching state by means of a forward and a rearward locating groove (32, 33), with an insulator (39) and an electrical conductor (40) whose surfaces are flush being provided in the switching cylinder (30) and with two spring-loaded contact pins (42a, 42b) arranged axially one behind the other and acting upon the switching cylinder (30) being included in the switch (41) which, in the moved-in switching position of the switching cylinder (30), are connected with each other to produce an electric signal via the electric conductor (40).

11. Shut-off system in accordance with Claim 1, **characterized in that** the sensors (21; 27, 28) and the electric switching element (29, 30) are connected via an electric connecting line (22) with the electronic control which is connected via a power supply (25) to a fuel shut-off valve (23) for the interruption of the fuel supply.

## Revendications

1. Système de coupure destiné à éviter un état de surrégime en cas de rupture d'arbre, en particulier à interrompre l'alimentation en carburant sur un moteur d'avion en cas de rupture de l'arbre de la turbine basse pression, l'arbre en question étant relié par son côté consommant de l'énergie à un arbre de référence coaxial, **caractérisé en ce qu'**à l'arbre de référence (2) est affecté du côté de l'arbre (1) produisant de l'énergie un organe déclenchant un signal (13, 14), pivotant et guidé dans celui-ci dans le sens axial, soumis à l'effet d'au moins un organe (12) exerçant une force axiale, et maintenu dans une position de verrouillage déverrouillable par des broches d'entraînement (17) faisant saillie dans le sens radial sur le pourtour de l'organe déclenchant un signal (13, 14) ainsi que par des crochets d'arrêt (18), sachant qu'à chaque broche d'entraînement (17) est conjugué latéralement dans le sens circonférentiel un entraîneur (19) relié à l' arbre (1), pour qu'en cas de rupture d'arbre et du décalage angulaire en résultant de l'arbre (1) par rapport à l'arbre de référence (2), l'organe déclenchant un signal (13, 14) soit dégagé de la position de verrouillage et propulsé dans le sens axial en direction d'au moins un capteur (21) ou d'un organe de commutation électrique (29, 30) faisant face dans le sens axial à l'organe déclenchant un signal (13, 14) et destiné à générer un signal électrique pour une commande électronique (24) afin d'interrompre l'alimentation en énergie et de limiter un état de surrégime.

2. Système de coupure selon la revendication 1, **caractérisé en ce que** l'organe déclenchant un signal comprend un plateau de piston (14) fixé sur une tige de piston (13) et muni des broches d'entraînement (17) prévues sur son pourtour, et que la tige de piston (13), qui présente un élément de butée (16) pour limiter sa course axiale, est guidée dans un carter (9) qui est relié à l'arbre de référence (2) dans le sens axial, logé dans une douille de guidage (6) formée par l'arbre (1) avec des entraîneurs (19) placés sur son pourtour intérieur, et présente des cages (11) pour les organes (12) exerçant une force axiale ainsi que des crochets d'arrêt (18) s'engageant dans les broches d'entraînement (17).

3. Système de coupure selon la revendication 2, **caractérisé en ce que** les organes exerçant une force axiale sont des ressorts de pression (12) ou des organes sous pression gazeuse.

4. Système de coupure selon la revendication 2, **caractérisé en ce que** l'élément de butée est une vis de butée (16).

5. Système de coupure selon la revendication 1, **caractérisé en ce que** sont prévus comme capteurs (21) des capteurs inductifs, capacitifs ou à ultrasons.

6. Système de coupure selon la revendication 5, **caractérisé en ce que** les capteurs (21) sont placés sur une plaque de capteurs (20) qui est montée sur une plaque de maintien (8) reliée au carter de la turbine (7).

7. Système de coupure selon la revendication 5, **caractérisé en ce que** la course axiale du plateau de piston (14) prend fin à une certaine distance des capteurs (21).

8. Système de coupure selon la revendication 1, **caractérisé en ce que** comme capteurs sont prévus des capteurs optiques sous forme d'un émetteur et d'un récepteur optiques (27, 28), placés en se faisant face à une certaine distance sur la plaque de maintien (8) du carter de la turbine (7), la course axiale du plateau de piston (14) étant réglée de sorte que le plateau de piston (14) interrompe le rayon lumineux émis par l'émetteur (27) lorsqu'il est mis en mouvement par une rupture d'arbre.

9. Système de coupure selon la revendication 1, **caractérisé en ce que** l'organe de commutation électrique comprend un boîtier de commutation (29) monté sur la plaque de maintien (8), avec commutateur (41) et à l'intérieur un cylindre de commutation (30) mobile dans le sens axial de façon limitée, qui, en cas de déplacement axial dû au déverrouillage de l'organe déclenchant un signal (14) suite à une rupture d'arbre, ferme un circuit électrique et génère le signal électrique pour la commande électronique (24) afin d'interrompre l'alimentation en énergie.

10. Système de coupure selon la revendication 9, **caractérisé en ce que** dans le boîtier de commutation (29) est placée une bille de blocage (36) agissant sous l'effet d'un ressort sur le pourtour du cylindre de commutation (30), et qui avec des encoches d'arrêt avant et arrière (32, 33) bloque le cylindre de commutation (30) dans les états de commutation respectifs, sachant que sont encastrés dans le cylindre de commutation (30) un isolateur (39) et un conducteur électrique (40) affleurant sa surface, et que dans le commutateur (41) sont intégrées deux fiches de contact (42a, 42b) placées l' une derrière l' autre dans le sens axial et agissant sur le cylindre de commutation (30) sous l'effet de ressorts, et qui dans la position rétractée du cylindre de commutation (30), sont reliées entre elles par le conducteur électrique (40) pour générer un signal électrique.

11. Système de coupure selon la revendication 1, **caractérisé en ce que** les capteurs (21 ; 27, 28) et l'organe de commutation électrique (29, 30) sont reliés à la commande électronique par un câble de connexion électrique (22), qui est raccordé par l'intermédiaire d'une alimentation en courant (25) à une vanne d'arrêt de carburant (23) destinée à interrompre l'alimentation en carburant.
